# EUROPEAN PATENT SPECIFICATION

(11) **EP 1 598 410 B1**
(45) Date of publication and mention of the grant of the patent: **31.12.2008**
(21) Application number: 05380094.2
(22) Date of filing: 12.05.2005
(51) Int. Cl.: C10G 25/00, B01D 15/08

(54) **Process and device for removing polychlorinated biphenyls (PCBs) from dielectric refrigerant fluids (FDRs) contained in electrical equipment**
Verfahren und Apparat zum Entfernen polychlorierter Biphenyle (PCB) aus dielektrischen Kühlfüssigkeiten elektrischer Anlagen
Procédé et dispositif pour éliminer les polychlorobiphényles (PCB) des liquides de refroidissement diélectriques provenant d'équipements électriques

(30) Priority: 14.05.2004 AR 0401621
(43) Date of publication of application: 23.11.2005
(73) Proprietor: Grumium S.A., C1084ABB, Buenos Aires (AR)
(72) Inventor: Perez, Jorge Daniel, X5011BQM Cordoba (AR)
(74) Representative: Durán Moya, Carlos

(56) References cited:
- WO-A-94/06537
- US-A- 4 124 834
- US-A- 4 526 677
- US-A- 4 950 837

## Description

The present invention concerns and principally relates to a process for removing and remediating polychlorinated biphenyls (PCBs) from dielectric refrigerant fluids (FDRs) contained in electrical equipment, and the device for carrying out said process.

Said electrical equipment includes the first distribution transformers which were manufactured in the USA in 1885. These transformers were of the dry type and used air as the dielectric refrigerant fluid (FDR). However, the use of mineral oil as FDR was considered and was patented by Professor Eliu Thompson in 1882, a decade being required for its implementation by General Electric in 1892. Consequently, the industry turned its attention to the modification and study of the ideal mineral oil for dielectric use, and refineries immediately began to produce specific oils for transformers.

FDRs belonging to the chemical group known as halogenated hydrocarbons (chlorinated and fluorinated derivatives) were subsequently developed and became increasingly important on account of their characteristic of being non-inflammable. The best behaved, most widely used halogenated hydrocarbons were polychlorinated hydrocarbons which were put on sale in 1930 under trade marks such as Askarel, Clophen, Pyralene, Inerteen, Pyranol, etc. These compounds include mono-, di- and trichlorobenzenes and polychlorinated biphenyls, commonly known as PCBs.

In the 70s, these compounds began to be harshly criticised on account of their possible effects on health and their persistence in the environment, and this is why various international treaties began to be developed with the aim of prohibiting the manufacture and sale of these compounds and any materials which may have been contaminated therewith, such as electrical transformers and materials.

Owing to these circumstances, governments throughout the world rapidly began to issue regulations, the most widely known being those of Canada, Europe and Japan, which were drawn up by the EPA and used throughout the world.

However, awareness of the risks of such compounds arrived late in the majority of countries, in particular the developing countries. This led to the release of significant quantities of PCB residues and contaminated materials into the environment.

In view of the widespread contamination and in the specific case of transformers which are sufficiently hermetic (contamination is due to losses or evaporation of the PCB), the majority of states and the EPA proposed the progressive elimination of the contaminant, by establishing standards with ever-decreasing limits and fixing more or less prolonged periods for compliance therewith.

The EPA decided that a transformer having PCB contamination of less than 50 parts per million would be considered similar to one which operates with mineral oil such as FDR. If contamination is greater than 50 ppm and less than 500 ppm, the equipment may remain in service but with specific monitoring and controls; if the quantity exceeds 500 ppm, the apparatus is considered as having pure PCB and must be removed from service and remediated.

According to the prior art, the ban on the use of polyhalogenated hydrocarbons such as FDR led to numerous patents which claim processes for removing and remediating said hydrocarbons.

US patent No. 3,881,295 describes a synthetic solid product based on a polymeric resin for providing PCB.

US patent No. 4,230,053 claims a process at elevated temperature (1650°C) employing iron-containing byproducts from the production of steel to which is added a mineral acid and magnesium or manganese.

US patent No. 4,353,793 proposes the use of a mixture of polyalkenylglycol alkyl ether and an alkali metal hydroxide to reduce the PCB content in transformer insulating oils.

US patent No. 4,353,798 proposes a method of phase separation by freezing PCB-contaminated silicones, with the formation of a PCB-rich phase and a PCB-depleted phase.

US patent No. 4,387, 018 claims the extraction of PCB contained in oils using methanol.

US patent Nos. 4,400,936 describes the combustion of PCB by the injection thereof into a diesel engine and the treatment of the exhaust gases.

US patents No. 4,340,471 and 4,379,746 claim the use of a fused sodium emulsion with diverse variations.

Finally, US patents Nos. 6,649,044 and 6,382,537 provide processes based on metals such as sodium, potassium, magnesium, aluminium, iron and zinc accompanied by amines and hydrogen donors for achieving the reductive dehalogention of halogenated hydrocarbons.

Despite the existence of this large number of patents which provide processes for removing and remediating PCBs in various fluids, the technology which has thrived in the developed countries is that based on dehalogenation by means of alkali metals and basically sodium. Although the high reactivity of halogenated compounds with alkali metals is known, it should be pointed out that the risks thereof are also high.

On the one hand, the process is based on sodium, which has been fused by the action of heat and has been emulsified in hydrocarbons, which necessitates extreme anhydrous conditions with the risk of an uncontrolled reaction between the metal and the water and the consequent risk of ignition of the PCB-contaminated oil and the hydrocarbons used.

With regard to chemical reactivity, international scientific literature contains innumerable papers relating to the reaction of metallic sodium or potassium with haloaromatic compounds. The most recent and relevant will probably be the paper by Dr Roberto Rossi and his collaborators (see Rossi R. A., Pierini A. and Peñeñor A., in Chemical Review 2003, 103, 71-167) linked with electron transfer.

When sodium is confronted with haloaromatic compounds, electron transfer initially takes place between the alkali metal and the substrate, and this triggers a reaction with benzyne-type anionic radical, radical, anion and dehydroaromatic intermediates. The high reactivity and extremely short average life of these intermediates results in mixtures of products, including biphenylidene-type condensed aromatic hydrocarbons which are known to be carcinogenic. In this case, we would be transforming products which are known to be toxic, such as the PCBs which we are allegedly remediating, into new toxic substances.

Finally, and in particular in relatively underdeveloped countries, this technology is difficult to implement, and this results in incremental costs for shipping the contaminated materials to the central countries.

US 4 526 677 discloses a process according to the preamble of claim 1, wherein the PCB adsorbent is activated carbon of unespecified origin, claiming a removal of PCBs of 50% without especifying the type of activated carbon nor the other conditions of the process. Moreover, the process of said document requires prewetting and soaking for obtaining a maximum effectiveness.

In view of the foregoing, the invented process involves removing the PCBs from the FDRs using a combustible adsorbent of vegetable origin, which recovers the FDRs for use thereof and then remediates the adsorbent with PCB, using methods recognised by the ICCA (International Council of Chemical Associations), such as "best available techniques for destruction of PCBs" by direct incineration or by basic catalysis using methods which are in the public domain.

It is therefore an economical, simple and safe process which may be implemented using a device that is installed in situ relative to the existing equipment or ex situ and in this case, for treating FDRs which have previously been removed from the equipment.

Owing to its features and in order to anticipate its genuine inventive scope, be said that the process invented for the specific purposes comprises the stages of extracting the FDRs from the electrical equipment, passing them through a PCB adsorbent at a flow rate that determines the residence time, returning them to the electrical equipment and remediating the PCB-containing adsorbent.More in particular, the present invention comprises a process according to claim 1. Advantageous embodiments of the present invention are described in subclaims.

The device for carrying out said process, in turn, is characterised in that it comprises, in an FDR inlet and outlet conduit, a dirt and particle retaining filter which precedes a pump for metering and propelling said FDR through columns with three-way valves and an automatic flowmeter for regulating the velocity of passage, which determines the residence time in said columns.

According to an embodiment, a sample of 10 litres of insulating oil contaminated with PCB (1777 ppm) and originating from a mixture of oils from approximately 1000 transformers and provided by the CEQUIMAP (Centre for Applied Chemistry of the National University of Cordoba) was processed by passing it through two columns each loaded with 500 g of activated carbon originating from groundnut shell from COTAGRO, with a methylene blue index (IAM) >25 and a grain-size distribution -20 + 200, preferably -45 + 170 [US standard sieve size]. The residence time was set between 5 and 120 minutes, preferably between 15 and 60 minutes, an oil containing 50 ppm of PCB being obtained in a single cycle.

According to a second embodiment identical to the first-described embodiment except that the product is recycled through the same train of traps constituted by the columns, an oil containing 2 ppm of PCB was obtained.

The device for carrying out the invented process has been illustrated in the accompanying schematic drawings, in which:

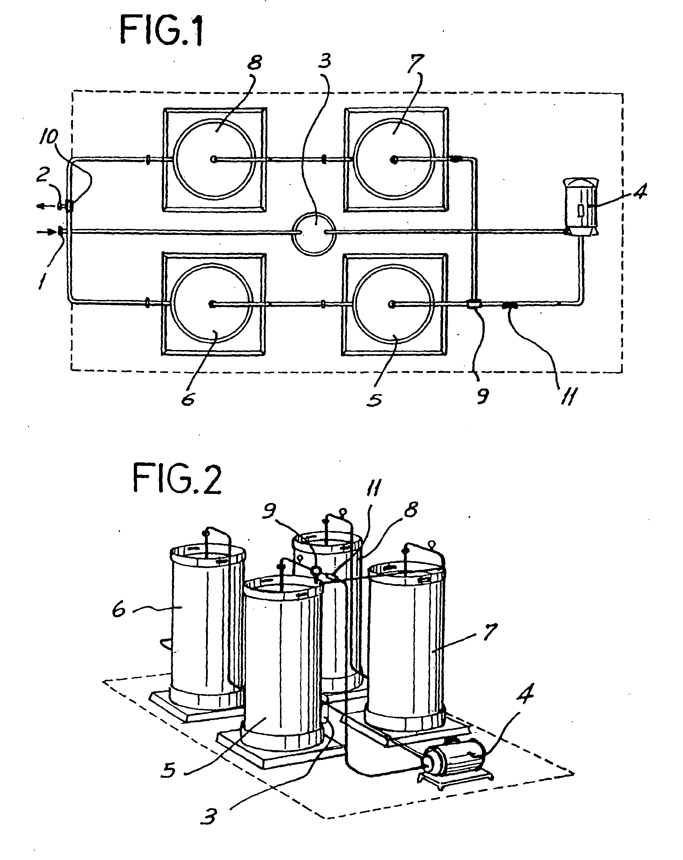

Fig. 1 is a plan view thereof, and
Fig. 2 is a perspective view thereof.

In both illustrative figures, like reference numerals denote like or corresponding parts.

Referring to the figures, the device for carrying out the process invented for the specific purposes comprises a conduit with its inlet 1 and its outlet 2 for the FDRs, the filter 3 for retaining dirt and particles, which is disposed upstream of the metering pump 4 which, for its part, propels these FDRs through the columns 5 and 6 or 7 and 8 under the control of the three-way valves 9 and 10 and with interposition of the flowmeter 11 at the outlet of said metering pump 4.

## Claims

1. Process for removing and remediating polychlorinated biphenyls (PCBs) from dielectric refrigerant fluids (FDRs) contained in electrical equipment, which comprises the stages of extracting the FDRs from the electrical equipment, passing them through a PCB adsorbent at a flow rate that determines the residence time, returning them to the electrical equipment and remediating the PCB-containing adsorbent, **characterised in that** said PCB adsorbent is activated carbon originated from groundnut shell.

2. Process, according to claim 1 , **characterised in that** said PCB adsorbent has a methylene blue index greater than 25.

3. Process, according to claims 1 or 2, **characterised in that** the activated carbon has a grain size distribution of -20 +200.

4. Process, according to claim 3, **characterised in that** the activated carbon has a grain size distribution of -45 +170.

5. Process according to **anyone of** claims 1 to 4, **characterised in that** said flow rate determines a residence time of between **5** and 120 minutes.

6. Process, according to claim 3, **characterised in that** the residence time is between 15 and 60 minutes.

7. Process, according to claims 3 or 4, **characterised in that** a single cycle of stages according to claim 1 is performed so that the FDR contains one treated less than 50 parts per million.

8. Process, according to anyone of claims 3 to 5, **characterised in that** the obtained product is recycled, passing it through the PCB adsorbent, until the FDR contains less than 2 parts per million

9. Device for carrying out the process according to anyone of claims 1 to 8, which comprises, a dirt and particle retaining filter, arranged in an FDR inlet and outlet conduit, the filter preceding a pump for metering and propelling said FDR through columns with three-way valves and an automatic flowmeter for regulating the velocity of passage, which determines the residence time in said columns, the device comprising a PCB adsorbent which comprises activated carbon originated from groundnut shell.

## Patentansprüche

1. Verfahren zum Entfernen von und zur Abhilfe bei polychlorierten Biphenylen (PCB) aus dielektrischen Kühlflüssigkeiten (FDR), die in einer elektrischen Anlage enthalten sind, welches die folgenden Stufen umfaßt:
Herausholen der FDR aus der elektrischen Anlage, Leiten dieser durch ein PCB-Adsorptionsmittel mit einer Strömungsrate, die die Verweilzeit bestimmt, deren Rückführung zur elektrischen Anlage und Regenerierung des PCB enthaltenen Adsorptionsmittels,
**dadurch gekennzeichnet, daß** das PCB-Adsorptionsmittel Aktivkohle ist, die von Erdnußschalen stammt.

2. Verfahren nach Anspruch 1, **dadurch gekennzeichnet, daß** das PCB-Adsorptionsmittel einen Methylenblau-Index von mehr als 25 aufweist.

3. Verfahren nach Anspruch 1 oder 2, **dadurch gekennzeichnet, daß** die Aktivkohle eine Korngrößenverteilung von -20 +200 aufweist.

4. Verfahren nach Anspruch 3, **dadurch gekennzeichnet, daß** die Aktivkohle eine Korngrößenverteilung von -45 +170 aufweist.

5. Verfahren nach einem der Ansprüche 1 bis 4, **dadurch gekennzeichnet, daß** die Strömungsrate eine Verweilzeit von 5 bis 120 Minuten bestimmt.

6. Verfahren nach Anspruch 3, **dadurch gekennzeichnet, daß** die Verweilzeit zwischen 15 und 60 Minuten liegt.

7. Verfahren nach Anspruch 3 oder 4, **dadurch gekennzeichnet, daß** ein einziger Zyklus der Stufen gemäß Anspruch 1 so durchgeführt wird, daß das FDR einmal behandelt weniger als 50 Teile pro Million enthält.

8. Verfahren nach einem der Ansprüche 3 bis 5, **dadurch gekennzeichnet, daß** das erhaltene Produkt rezirkuliert wird, indem es durch das PCB-Adsorptionsmittel geleitet wird, bis das FDR weniger als 2 Teile pro Million enthält.

9. Vorrichtung zur Durchführung des Verfahrens nach einem der Ansprüche 1 bis 8, welche umfaßt:
einen Schmutz und Partikel zurückhaltenden Filter, der in einer FDR-Einlaß- und Auslaßleitung angeordnet ist, wobei sich der Filter vor eine Pumpe zum Dosieren und Treiben des FDR durch die Säulen mit Dreiwege-Ventilen und einem automatischen Durchflußmeßgerät zum Regeln der Durchlaufgeschwindigkeit befindet, das die Verweilzeit in den Säulen bestimmt, wobei die Vorrichtung ein PCB-Adsorptionsmittel umfaßt, das Aktivkohle umfaßt, die von Erdnußschalen stammt.

## Revendications

1. Procédé d'élimination et d'épuration de polychlorobiphényles (PCB) de fluides frigorigènes diélectriques (FDR) contenus dans un équipement électrique, qui comprend les étapes suivantes : extraire les FDR de l'équipement électrique, les passer à travers un adsorbant de PCB à un débit qui détermine le temps de présence, les renvoyer dans l'équipement électrique et recycler l'adsorbant contenant les PCB, **caractérisé en ce que** ledit adsorbant de PCB est du charbon actif provenant de coquilles d'arachide.

2. Procédé selon la revendication 1, **caractérisé en ce que** ledit adsorbant de PCB possède un indice de bleu de méthylène supérieur à 25.

3. Procédé selon les revendications 1 ou 2, **caractérisé en ce que** le charbon actif possède une répartition granulométrique de -20 +200.

4. Procédé selon la revendication 3, **caractérisé en ce que** le charbon actif possède une répartition granulométrique de -45 +170.

5. Procédé selon l'une quelconque des revendications 1 à 4, **caractérisé en ce que** ledit débit détermine un temps de présence compris entre 5 minutes et 120 minutes.

6. Procédé selon la revendication 3, **caractérisé en ce que** le temps de présence est compris entre 15 minutes et 60 minutes.

7. Procédé selon les revendications 3 ou 4, **caractérisé en ce qu'**un seul cycle d'étapes selon la revendication 1 est exécuté de manière à ce que le FDR contienne moins de 50 parties par million une fois traité.

8. Procédé selon l'une quelconque des revendications 3 à 5, **caractérisé en ce que** le produit obtenu est recyclé, en le passant à travers l'adsorbant de PCB, jusqu'à ce que le FDR contienne moins de 2 parties par million.

9. Dispositif permettant de mettre en oeuvre le procédé selon l'une quelconque des revendications 1 à 8, qui comprend un filtre retenant les poussières et les particules, disposé dans un conduit d'entrée et de sortie de FDR, le filtre étant placé avant une pompe servant à doser et à propulser ledit FDR à travers des colonnes équipées de valves à trois voies et un débitmètre automatique servant à réguler la vitesse de passage, qui détermine le temps de présence dans lesdites colonnes, le dispositif comprenant un adsorbant de PCB qui comprend du charbon actif provenant de coquilles d'arachide.
